(19) Europäisches Patentamt / European Patent Office / Office européen des brevets

(11) **EP 4 391 610 A1**

(12) **EUROPEAN PATENT APPLICATION**
published in accordance with Art. 153(4) EPC

(43) Date of publication:
**26.06.2024 Bulletin 2024/26**

(21) Application number: **22882923.0**

(22) Date of filing: **19.10.2022**

(51) International Patent Classification (IPC):
**H04W 4/80** (2018.01)    **H04B 5/00** (2006.01)
**H04W 72/00** (2023.01)

(52) Cooperative Patent Classification (CPC):
**H04B 5/00; H04W 4/80; H04W 24/10; H04W 72/12;**
H04W 72/00

(86) International application number:
**PCT/CN2022/126263**

(87) International publication number:
**WO 2023/066318 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2021 CN 202111222051**

(71) Applicant: **Vivo Mobile Communication Co., Ltd.
Dongguan, Guangdong 523863 (CN)**

(72) Inventors:
• HUANG, Wei
  Dongguan, Guangdong 523863 (CN)
• JIANG, Dajie
  Dongguan, Guangdong 523863 (CN)
• SHEN, Xiaodong
  Dongguan, Guangdong 523863 (CN)

(74) Representative: **Murgitroyd & Company
165-169 Scotland Street
Glasgow G5 8PL (GB)**

(54) **BSC TERMINAL CAPABILITY REPORTING METHOD AND APPARATUS, TERMINAL, AND NETWORK SIDE DEVICE**

(57)    This application discloses a method and an apparatus for reporting a capability of a BSC terminal, a terminal, and a network side device, and pertains to the field of communication technologies. The method for reporting a capability of a backscatter communication BSC terminal in embodiments of this application includes: sending, by the BSC terminal, capability information of the BSC terminal to the network side device, where the capability information is used to indicate one or more capabilities supported by the BSC terminal.

FIG. 7

EP 4 391 610 A1

**Description**

**CROSS-REFERENCE TO RELATED APPLICATION**

This application claims priority to Chinese Patent Application No. 202111222051.5, filed on October 20, 2021 and entitled "METHOD AND APPARATUS FOR REPORTING CAPABILITY OF BSC TERMINAL, TERMINAL, AND NETWORK SIDE DEVICE", which is incorporated herein by reference in its entirety.

**TECHNICAL FIELD**

This application pertains to the field of communication technologies, and specifically relates to a method and an apparatus for reporting a capability of a BSC terminal, a terminal, and a network side device.

**BACKGROUND**

Backscatter communication (Backscatter Communication, BSC) means that a backscatter communication device performs signal modulation by using a radio frequency signal in another device or an environment to transmit its own information. From the perspective of a manner of controlling or changing load impedance, backscatter communication is divided into analog modulation-based backscatter communication and digital modulation-based backscatter communication. From the perspective of an energy supply manner, transmit ends of backscatter communication may be divided into three types: passive (Passive), semi-passive (Semi-passive), and active (Active).
Due to differences in the energy supply manner, a hardware architecture, a modulation mode, and the like of BSC terminals, parameters representing communication-related capabilities of the BSC terminals are not completely the same, and therefore a manner of combining types/capabilities/parameters related to the BSC terminals is quite flexible. If the network side device (for example, a base station) does not know a type, an energy supply manner, a modulation mode, and other parameters of the BSC terminal associated with the network side device, the network side device cannot well control a reflection coefficient and data scheduling of the BSC terminal, affecting communication performance of backscatter communication. Therefore, how to report a capability of a BSC terminal is a technical problem that urgently needs to be resolved by a person skilled in the art.

**SUMMARY**

Embodiments of this application provide a method and an apparatus for reporting a capability of a BSC terminal, a terminal, and a network side device, to resolve a technical problem of how to report a capability of a BSC terminal.
According to a first aspect, a method for reporting a capability of a backscatter communication BSC terminal is provided, and is applied to a terminal. The method includes:
The BSC terminal sends capability information of the BSC terminal to a network side device, where the capability information is used to indicate one or more capabilities supported by the BSC terminal.
According to a second aspect, a method for reporting a capability of a backscatter communication BSC terminal is provided, and is applied to a network side device. The method includes:
The network side device receives capability information of the BSC terminal sent by the BSC terminal, where the capability information is used to indicate one or more capabilities supported by the BSC terminal.
According to a third aspect, an apparatus for reporting a capability of a backscatter communication BSC terminal is provided, including:
a sending module, configured to: send capability information of the BSC terminal to a network side device, where the capability information is used to indicate one or more capabilities supported by the BSC terminal.
According to a fourth aspect, an apparatus for reporting a capability of a backscatter communication BSC terminal is provided, including:
a receiving module, configured to receive capability information of the BSC terminal sent by the BSC terminal, where the capability information is used to indicate one or more capabilities supported by the BSC terminal.
According to a fifth aspect, a terminal is provided, where the terminal includes a processor, a memory, and a program or an instruction stored in the memory and executable on the processor, and when the program or the instruction is executed by the processor, the steps of the method according to the first aspect are implemented.
According to a sixth aspect, a terminal is provided, including a processor and a communication interface, where the communication interface is configured to send capability information of a BSC terminal to a network side device, and the capability information is used to indicate one or more capabilities supported by the BSC terminal.
According to a seventh aspect, a network side device is provided. The network side device includes a processor, a memory, and a program or an instruction stored in the memory and executable on the processor, where when the program or the instruction is executed by the processor, the steps of the method according to the second aspect are implemented.

According to an eighth aspect, a network side device is provided, including a processor and a communication interface, where the communication interface is configured to receive capability information of a BSC terminal sent by the BSC terminal, and the capability information is used to indicate one or more capabilities supported by the BSC terminal.

According to a ninth aspect, a readable storage medium is provided, where the readable storage medium stores a program or an instruction, and when the program or the instruction is executed by a processor, the steps of the method according to the first aspect or the steps of the method according to the second aspect are implemented.

According to a tenth aspect, a chip is provided. The chip includes a processor and a communication interface, the communication interface is coupled to the processor, and the processor is configured to run a program or an instruction, to implement the method according to the first aspect or the method according to the second aspect.

According to an eleventh aspect, a computer program/program product is provided, where the computer program/program product is stored in a non-transient storage medium, and the program/program product is executed by at least one processor to implement the steps of the method for reporting a capability of a BSC terminal according to the first aspect or the second aspect.

In the embodiments of this application, the BSC terminal sends the capability information of the BSC terminal to the network side device, where the capability information is used to indicate the one or more capabilities supported by the BSC terminal, so that the capability of the BSC terminal is reported to the network side device. This facilitates scheduling of the BSC terminal by the network side device according to the reported capability of the BSC terminal, thereby improving performance of backscatter communication.

**BRIEF DESCRIPTION OF DRAWINGS**

FIG. 1 is a structural diagram of a wireless communication system to which embodiments of this application are applicable;

FIG. 2 is a first schematic diagram of a principle of backscatter communication according to an embodiment of this application;

FIG. 3 is a second schematic diagram of a principle of backscatter communication according to an embodiment of this application;

FIG. 4 is a schematic diagram of a monostatic backscatter communication system according to an embodiment of this application;

FIG. 5 is a schematic diagram of a bistatic backscatter communication system according to an embodiment of this application;

FIG. 6 is a structural diagram of a backscatter communication system to which embodiments of this application are applicable;

FIG. 7 is a first schematic flowchart of interaction of a method for reporting a capability of a BSC terminal according to an embodiment of this application;

FIG. 8 is a second schematic flowchart of interaction of a method for reporting a capability of a BSC terminal according to an embodiment of this application;

FIG. 9 is a third schematic flowchart of interaction of a method for reporting a capability of a BSC terminal according to an embodiment of this application;

FIG. 10 is a first schematic structural diagram of an apparatus for reporting a capability of a BSC terminal according to an embodiment of this application;

FIG. 11 is a second schematic structural diagram of an apparatus for reporting a capability of a BSC terminal according to an embodiment of this application;

FIG. 12 is a schematic structural diagram of a communication device according to an embodiment of this application;

FIG. 13 is a schematic diagram of a hardware structure of a terminal according to an embodiment of this application; and

FIG. 14 is a schematic structural diagram of a network side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated obj ects.

It should be noted that, the technologies described in the embodiments of this application are not limited to a long term evolution (Long Term Evolution, LTE)/LTE-Advanced (LTE-Advanced, LTE-A) system, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies may also be applied to an application other than an NR system application, for example, a 6-th generation (6-th Generation, 6G) communication system.

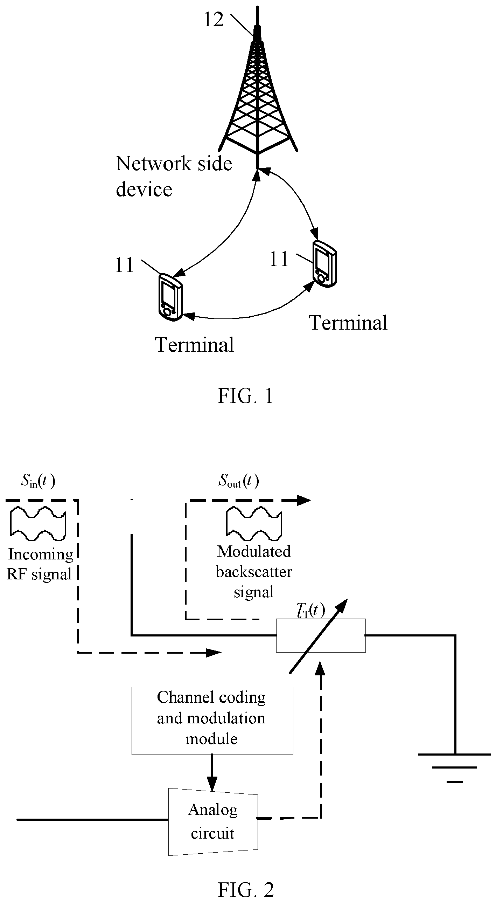

FIG. 1 is a structural diagram of a wireless communication system to which embodiments of this application are applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (Augmented reality, AR)/virtual reality (virtual Reality, VR) device, a robot, a wearable device (Wearable Device), vehicle user equipment (VUE), pedestrian user equipment (PUE), or a smart home (a home device having a wireless communication function, such as a refrigerator, a television, a washing machine, or furniture). The wearable device includes: a smartwatch, a smart bracelet, a smart headphone, smart glasses, smart jewelry (a smart bangle, a smart bracelet, a smart ring, a smart necklace, a smart anklet, a smart ankle chain, and the like), a smart wristband, smart clothing, a game console, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that same technical effect is achieved, the base station is not limited to a specified technical term. It should be noted that, in the embodiments of this application, only a base station in an NR system is used as an example, but a specific type of the base station is not limited.

The method in the embodiments of this application may be applied to a backscatter communication terminal, including, for example, a tag (Tag) in conventional radio frequency identification (Radio Frequency Identification, RFID), an Internet of Things (Internet of Things, IoT) device, and the like.

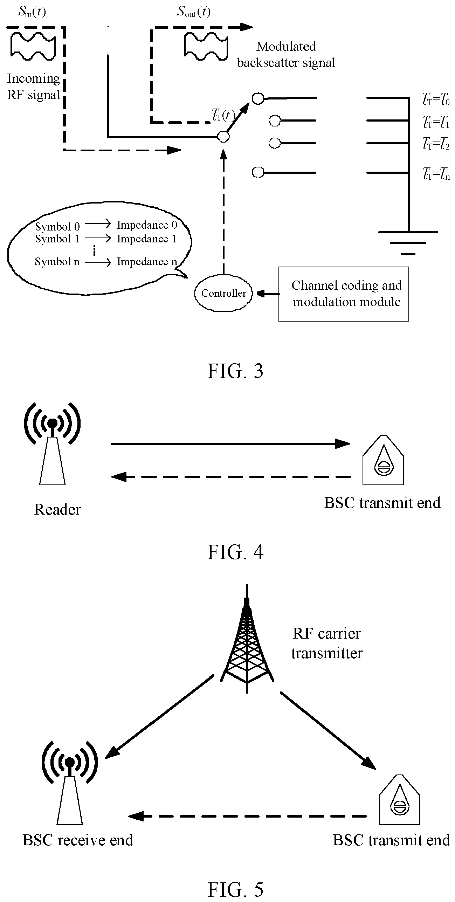

Backscatter communication means that a backscatter communication device performs signal modulation by using a radio frequency signal in another device or an environment to transmit its own information. Its modulation circuit is shown in FIG. 2 and FIG. 3. The backscatter communication device controls a reflection coefficient $\Gamma$ of the circuit by adjusting its internal impedance, so as to change an amplitude, a frequency, a phase, and the like of an incoming signal to implement signal modulation. The reflection coefficient of the signal may be represented as:

$$\Gamma = \frac{Z_1 - Z_0}{Z_1 + Z_0} = |\Gamma| e^{j\theta_T}$$

where $Z_0$ is antenna characteristic impedance, and $Z_1$ is a load impedance. Assuming that the incoming signal is $S_{in}(t)$, an output signal is $S_{out}(t) = S_{in}(t)|F|e^{j\theta_T}$. Therefore, corresponding amplitude modulation, frequency modulation, or phase modulation can be implemented through proper control of the reflection coefficient.

From the perspective of a manner of controlling or changing the load impedance $Z_1$, backscatter communication is divided into analog modulation-based backscatter communication and digital modulation-based backscatter communication. As shown in FIG. 2, in analog modulation-based backscatter communication, the load impedance $Z_1$ is changed

by adjusting a built-in analog circuit, and adjustment is performed in a continuous manner, so that the reflection coefficient that can be adjusted has high accuracy. As shown in FIG. 3, in digital modulation-based backscatter communication, several load impedances are pre-built for selection, and one of the load impedances is selected by using a controller, to change the reflection coefficient Therefore, accuracy of the reflection coefficient based on digital modulation is strongly correlated with a quantity of built-in load impedances.

From the perspective of an energy supply manner, backscatter communication terminals may be divided into three types: passive (Passive), semi-passive (Semi-passive), and active (Active). For passive backscatter communication, the BSC terminal first performs energy harvesting (energy harvesting) in external electromagnetic waves, and supplies the energy to channel coding and modulation and other internal circuit modules for working, and at the same time, backscatters a radio frequency signal for communication, so as to implement zero-power communication. For a semi-passive BSC terminal, an internal circuit module of the BSC terminal is powered by its own battery and a radio frequency signal is backscattered for communication. Because its internal battery is only used for work of simple internal circuit modules such as channel coding and modulation, power consumption is quite low. Therefore, the battery life of the BSC terminal can reach more than ten years. In addition, because all external radio frequency signals can be used for backscatter communication and there is no need to store some energy for power supply, a reflection coefficient for backscatter communication can be higher. For an active BSC terminal, a built-in battery of the active BSC terminal can be used not only for work of simple internal circuits such as channel coding and modulation, but also for work of circuits such as a power amplifier (Power Amplifier, PA) and a low noise amplifier (Low Noise Amplifier, LNA), so that signal modulation and demodulation with higher complexity and better performance for backscatter communication can be implemented. Further, if battery energy is sufficient, BSC terminals themselves can send radio frequency signals to support communication between the BSC terminals.

In terms of the architecture of backscatter communication, backscatter communication systems may be divided into monostatic backscatter communication systems (Monostatic backscatter communication systems, MBCSs), bistatic backscatter communication systems (bistatic backscatter communication systems, BBCSs), and ambient backscatter communication systems (Ambient backscatter communication systems, ABCSs).

FIG. 4 shows an MBCS. For example, a conventional RFID system is a typical MBCS, and the system includes a BSC transmit end (for example, a Tag) and a reader Reader. The reader Reader includes an RF radio frequency source and a BSC receive end, where the RF radio frequency source is used to generate an RF radio frequency signal to supply energy to the BSC transmit end/Tag. The BSC transmit end backscatters a modulated RF radio frequency signal, and the BSC receive end in the Reader receives the backscatter signal and then performs signal demodulation. Because the RF radio frequency source and the BSC receive end are in a same device, for example, the Reader herein, the system becomes a monostatic backscatter communication system. In the MBCS system, because the RF radio frequency signal sent out from the BSC transmit end undergoes double near-far effect caused by signal attenuation of a round-trip signal, energy attenuation of the signal is high. Therefore, the MBCS system is generally used for short-range backscatter communication, such as conventional RFID application.

Different from the MBCS system, the RF radio frequency source and the BSC receive end are separate in the BBCS system. FIG. 5 is a schematic diagram of the BBCS system. Therefore, the BBCS avoids the problem of high attenuation of a round-trip signal. In addition, performance of the BBCS communication system can be further improved by properly placing the RF radio frequency resource. Same as the BBCS system, the RF radio frequency source and the BSC receive end are also separate in the ABCS system. However, the radio frequency resource in the BBCS system is a dedicated signal radio frequency resource, but the radio frequency source in the ABCS system may be an available radio frequency source in an environment, for example, a TV tower, a cellular base station, a Wi-Fi signal, a Bluetooth signal, or the like. Therefore, compared with the BBCS system, advantages of ABCS are as follows: (1) the ABCS does not require additional deployment of a dedicated radio frequency source, so that deployment costs can be reduced; and (2) the ABCS does not require additional allocation of frequency resources for backscatter communication because a radio frequency signal in the environment is used, so that frequency band utilization can be improved. However, the ABCS system also has some technical challenges, such as unpredictable and dynamic interference of modulated RF signals, and is more difficult to use in practice than the BBCS system due to its uncontrollable power and position.

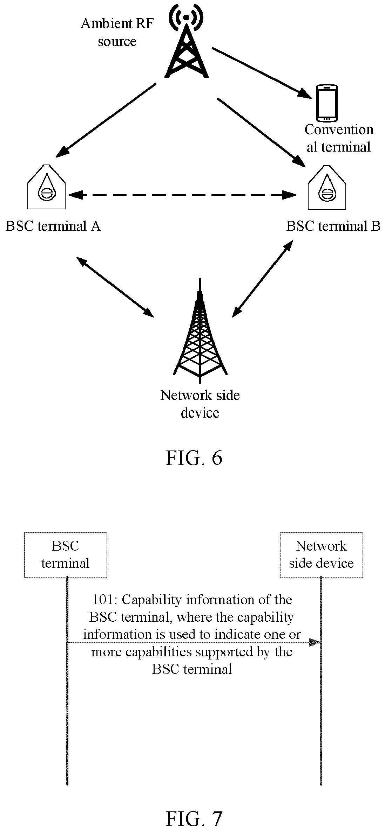

In an embodiment, the method for reporting a capability of a BSC terminal in this application may be applied to a system architecture shown in FIG. 6.

With reference to the accompanying drawings, a method for reporting a capability of a BSC terminal provided in the embodiments of this application is described in detail by using some embodiments and application scenarios thereof.

FIG. 7 is a first schematic flowchart of interaction of a method for reporting a capability of a BSC terminal according to an embodiment of this application. As shown in FIG. 7, the method for reporting a capability of a BSC terminal provided in this embodiment includes:

Step 101: The BSC terminal sends capability information of the BSC terminal to a network side device, where the capability information is used to indicate one or more capabilities supported by the BSC terminal.

Specifically, if the network side device (for example, a base station) does not know a type, an energy supply manner, a modulation mode, and other capability parameters of the BSC terminal associated with the network side device, the network side device cannot well control a reflection coefficient and data scheduling of the BSC terminal, affecting communication performance of backscatter communication.

Due to differences in the energy supply manner, a hardware architecture, the modulation mode, and the like of BSC terminals, parameters representing communication-related capabilities of the BSC terminals are not completely the same, and therefore the BSC terminals can flexibly report their capability information. Specific capability parameters and combination manners included in the capability information are also quite flexible.

In the method of this embodiment, the BSC terminal sends the capability information of the BSC terminal to the network side device, where the capability information is used to indicate the one or more capabilities supported by the BSC terminal, so that the capability of the BSC terminal is reported to the network side device. This facilitates scheduling of the BSC terminal by the network side device according to the reported capability of the BSC terminal, thereby improving performance of backscatter communication.

Optionally, the capability parameter includes at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

Optionally, the energy supply manner includes at least one of the following: passive, semi-passive, and active.

An example is given in Table 1, where BSC terminals are divided into the following types according to the energy supply manner: Type A, Type B, Type C, Type D, and Type E. Type A indicates passive (Passive) BSC terminals, which obtain energy from signals sent in an environment or in a dedicated signal source, and are used to drive channel coding and modulation, and other internal circuits built in the BSC terminals to work, and at the same time reflect some incoming signals to carry reverse transmission data. Because the BSC terminals of Type A are supplied with energy completely from external electromagnetic waves, power consumption may be less than 1 uW or may be even 0. Type B also indicates passive BSC terminals. Different from Type A, energy obtained by the BSC terminals of Type B from external electromagnetic waved cannot immediately drive the built-in circuits to work, but need to be stored for a period of time before working. After stored energy is enough to drive the built-in circuits to work, the BSC terminals of Type B also reflect some incoming signals at the same time, to carry reverse transmission data, so as to implement backscatter communication. Because the BSC terminals of Type B are also supplied with energy completely from external electromagnetic waves, power consumption may also be less than 1 uW or may be even 0. BSC terminals of Type C are semi-passive (Semi-Passive) BSC terminals, which are powered by a battery, but a powered part is used only for driving channel coding and modulation, and other internal baseband circuit modules, and the BSC terminals of Type C also reflect some incoming signals at the same time, to carry reverse transmission data. Because battery power supply to the BSC terminals of this type is used only for working of simple circuits such as baseband modulation and coding, power consumption is also merely 100 uW approximately. BSC terminals of Type D are active (Active) BSC terminals. Battery energy of these terminals can be used for driving LNA, PA, and other circuits to work in addition to supporting work of simple circuits such as baseband modulation and coding, and power consumption is approximately 1 mW. BSC terminals of Type E are active (Active) BSC terminals. Battery energy of these terminals can be used for driving LNA, PA, and other circuits to work, or even used for generating RF signals to support signal transmission between BSC terminals, in addition to supporting work of simple circuits such as baseband modulation and coding. Therefore, the BSC terminals of Type E have strong capabilities, and support long-distance transmission with power consumption of approximately 1 mW or greater than 1 mW

**Table 1: Examples of classification of energy supply manners of BSC terminals**

| Type | Energy supply manner | Circuit work | Power consumption |
|------|----------------------|--------------|-------------------|
| Type A | Passive (Passive) | Obtain energy from incoming RF signals, where the energy directly drives built-in circuits to work | Less than 1 uW |
| Type B | Passive (Passive) | Obtain energy from incoming RF signals, where power is stored for a period of time before being used for driving built-in circuits to work | Less than 1 uW |
| Type C | Semi-Passive (Semi-Passive) | A part is powered by a battery, and is used for driving channel coding and modulation, and other internal circuit modules to work. | Approximately 100 uW |

(continued)

| Type | Energy supply manner | Circuit work | Power consumption |
|------|---------------------|--------------|-------------------|
| Type D | Active (Active) | Powered by a battery, for driving LNA and/or PA to work in addition to driving channel coding and modulation, and other internal circuit modules to work. | Approximately 1 mW |
| Type E | Active (Active) | Powered by a battery, for driving channel coding and modulation, and other internal circuit modules to work, also for driving LNA and/or PA to work, and also used for generating RF radio frequency signals. | Greater than 1 mW |

It should be noted that, as the process continues to evolve, subsequent power consumption may be lower than the values described in Table 1, and this embodiment of this application merely provides descriptions by using typical power consumption that can be achieved now as examples.

Optionally, the energy storage parameter includes at least one of the following: a maximum energy storage capacity, a type of an energy storage capability, and signal information used for energy storage; the maximum energy storage capacity includes at least one of the following: a maximum energy storage electric quantity and a maximum energy storage power; and the signal information includes at least one of the following: a bandwidth, a frequency, a waveform, and a signal format.

Specifically, the maximum energy storage capacity is used to notify the network side device of a maximum energy storage capability of the BSC terminal, and the network side device may determine a data scheduling strategy according to energy storage of the BSC terminal. Specifically, the BSC terminal may report an actual supported energy storage capacity, for example, an energy storage capacity n m W' h, to the network side device; or the BSC terminal may report an energy storage capability type supported by the BSC terminal, where each energy storage capability type corresponds to a specific energy storage capacity, as shown in Table 2.

**Table 2: Examples of mapping relationships between energy storage capability types and energy storage capacities**

| Energy storage capability type | Energy storage capacity (mW·h) |
|-------------------------------|-------------------------------|
| 1 | 10 |
| 2 | 50 |
| ⋮ | ⋮ |
| $m$ | $n$ |

Optionally, the energy storage capacity may also use another measurement unit. For example, assuming that an operating voltage of the BSC terminals is deterministic, mA·h may also be used as a unit.

Optionally, the BSC terminal may also report a maximum energy storage power capability, that is, an instantaneous wireless energy storage power supported by the BSC terminal. In this case, units such as mW may be used.

Optionally, the amplitude modulation parameter is amplitude information of a supported adjustable reflected signal, continuous amplitude modulation or discrete amplitude modulation, and a quantity of states of corresponding continuous or discrete features. If the BSC terminal supports continuous amplitude modulation, the BSC terminal may report maximum and minimum amplitude modulation coefficients supported by the BSC terminal to the network side device, that is, $[\alpha_{min}, \alpha_{max}]$. If the BSC terminal supports discrete amplitude modulation, the BSC terminal may report each amplitude modulation coefficient supported by the BSC terminal to the network side device, in the form shown in Table 3.

**Table 3: Examples of amplitude modulation coefficients of the BSC terminal**

| |
|---|
| $\alpha_1$ |
| $\alpha_2$ |
| $\alpha_3$ |

(continued)

| |
|---|
| ⋮ |
| $\alpha_n$ |

Optionally, the phase modulation parameter is phase information of a supported adjustable reflected signal, continuous phase modulation or discrete phase modulation, and a quantity of states of corresponding continuous or discrete features. If the BSC terminal supports continuous phase modulation, the BSC terminal may report maximum and minimum phase modulation parameters supported by the BSC terminal to the network side device, that is, $[\theta_{min}, \theta_{max}]$. If the BSC terminal supports discrete phase modulation, the BSC terminal may report each phase modulation parameter supported by the BSC terminal to a base station, in the form shown in Table 4.

**Table 4: Examples of phase modulation parameters of the BSC terminal**

| |
|---|
| $\theta_1$ |
| $\theta_2$ |
| $\theta_3$ |
| ⋮ |
| $\theta_n$ |

Optionally, the frequency modulation parameter is frequency information of a supported adjustable reflected signal, continuous frequency modulation or discrete frequency modulation, and a quantity of states of corresponding continuous or discrete features. If the BSC terminal supports continuous frequency modulation, the BSC terminal may report maximum and minimum frequency modulation parameters supported by the BSC terminal to the network side device, that is, $[f_{min}, f_{max}]$. If the BSC terminal supports discrete frequency modulation, the BSC terminal may report each frequency modulation parameter supported by the BSC terminal to the network side device, in the form shown in Table 5.

**Table 5: Examples of frequency modulation parameters of BSC UE**

| |
|---|
| $f_1$ |
| $f_2$ |
| $f_3$ |
| ⋮ |
| $f_n$ |

Optionally, the operating frequency band means an operating frequency band supported by the BSC terminal, and includes an operating frequency band of an incoming signal and an operating frequency band of a backscatter signal. For example, the operating frequency band supported by the BSC terminal may be similar to an NR frequency band type supported by a common terminal. This is not limited in this embodiment of this application.

Optionally, the modulation bandwidth of the backscatter signal may be used to indicate a modulation rate of the BSC terminal. For example, the modulation bandwidth may be formally similar to a configuration of a bandwidth part (bandwidth part, BWP) supported by the common terminal. This is not limited in this embodiment of this application.

Optionally, the quantity of transmit antennas means a quantity of transmit antennas used for signal backscatter transmission. This parameter may be used by the network side device for pre-coding indication, positioning method indication, or the like.

Optionally, the quantity of receive antennas means a quantity of receive antennas used for receiving incoming signals. This parameter may be used by the base station for pre-coding indication, positioning method indication, or the like.

Optionally, the encryption parameter includes at least one of the following: whether encryption is supported and an encryption algorithm.

An encryption capability of the BSC terminal means an encryption or data integrity protection capability supported by the BSC terminal. For example, the BSC terminal supports cyclic redundancy check (Cyclic Redundancy Check, CRC) 16 or CRC 24, or a specific encryption algorithm.

Optionally, the coding parameter includes at least one of the following: a coding manner and a coding rate.

The coding manner includes at least one of the following: bi-phase space coding (Bi-Phase Space Coding) FM0, Manchester coding, and forward error correction (Forward Error Correction, FEC) coding.

Optionally, the device identifier ID may be represented by an electronic product code (Electronic Product Code, EPC), or another ID.

In an embodiment, the foregoing capability parameters may be reported separately or in combination, and the capability information includes at least one of the following: at least one piece of first information and at least one piece of second information, where the first information is used to indicate one capability parameter supported by the BSC terminal, and the second information is used to indicate at least two capability parameters supported by the BSC terminal.

Specifically, in a case that the capability information includes at least one piece of first information, that is, the capability parameter is reported separately, for example, the BSC terminal may report a capability parameter supported by the terminal in a signaling format of UE Capability Information, that is, the signaling format includes at least one piece of first information, and each piece of first information is used to indicate a capability parameter supported by the BSC terminal, and the network side device may directly obtain a desired capability parameter based on the UE Capability Information reported by the BSC terminal.

This implementation is simple to implement and is suitable for BSC terminals with relatively strong transmission capabilities or large energy storage capacities.

Further, because a transmission capability of the BSC terminal is limited by the energy storage capacity, it is desirable to have as little capability information reported as possible. Therefore, some of the capability parameters are reported in combination, to further reduce the information reported by the BSC terminal. At least one piece of second information may be used for combined reporting. To be specific, a plurality of capability parameters are indicated by at least one piece of second information, and each piece of second information may indicate at least two capability parameters supported by the BSC terminal, to reduce the information reported by the BSC terminal.

Specifically, the BSC terminal may report a capability parameter supported by the terminal in a signaling format of UE Capability Information, that is, the signaling format includes at least one piece of second information, and each piece of second information is used to indicate at least two capability parameters supported by the BSC terminal, and the network side device may directly obtain a desired capability parameter based on the UE Capability Information reported by the BSC terminal.

Optionally, the second information includes a modulation mode, and the modulation mode is used to indicate at least one of an amplitude modulation parameter, a phase modulation parameter, a frequency modulation parameter, and a coding parameter; and/or,
the second information includes an antenna capability, and the antenna capability is used to indicate at least one of a quantity of transmit antennas and a quantity of receive antennas.

Specifically, at least one of the amplitude modulation parameter, the phase modulation parameter, the frequency modulation parameter, and the coding parameter may be reported in a combined manner. For example, a modulation mode supported by the BSC terminal may be reported directly, and each modulation mode may represent whether the BSC terminal supports continuous or discrete amplitude/phase/frequency modulation and specific values of corresponding continuous or discrete features. As shown in Table 6, common ASK/PAM modulation, PSK modulation, FSK modulation, and QAM modulation, and corresponding amplitude/phase/frequency modulation thereof are listed.

Optionally, because an amplitude modulation capability supported by the BSC terminal, that is, an amplitude modulation coefficient that can be controlled, is similar to a conventional terminal power level and power control, the network side device may control power by adjusting the amplitude modulation coefficient. Therefore, even after the BSC terminal reports the supported modulation mode, the amplitude modulation capability, that is, the amplitude modulation coefficient further needs to be reported separately.

**Table 6: Examples of mapping relationships between modulation modes of the BSC terminal and amplitude/phase/frequency modulation capabilities**

|  | Modulation mode | Amplitude modulation capability | Phase modulation capability | Frequency modulation capability |
|---|---|---|---|---|
| 1 | ASK/4ASK/16ASK or OOK/4PAM/16PAM | Support 2-order/4-order/16-order amplitude modulation | - | - |

(continued)

|  | Modulation mode | Amplitude modulation capability | Phase modulation capability | Frequency modulation capability |
|---|---|---|---|---|
| 2 | PSK/4PSK/ 16PSK | - | Support 2-order/4-order /16-order phase modulation | - |
| 3 | FSK/4FSK/ 16FSK | - | - | Support 2-order/4-order /16-order frequency modulation |
| 4 | 4QAM/16QAM/ 64QAM | Support 1-order/2-order/4 -order amplitude modulation | Support 1-order/2-order /4-order phase modulation | - |
| ⋮ | ⋮ | ⋮ | ⋮ | ⋮ |

Optionally, Table 6 may be further expanded into a modulation and coding scheme (Modulation and Coding Scheme, MCS) table, to further report coding manners supported by the BSC terminal.

Optionally, the quantity of transmit antennas and the quantity of receive antennas may be reported in combination through the antenna capabilities. For example, configuration information of the antenna capabilities may be reported in a manner of a preset mapping table, and the BSC terminal reports only corresponding indexes Index corresponding to the configuration information. The mapping relationships may be shown in Table 7.

**Table 7: Examples of mapping table of antenna capabilities of the BSC terminal**

| Index | Mode | Quantity of corresponding receive/transmit antennas |
|---|---|---|
| 1 | 1T1R | One transmit antenna, one receive antenna |
| 2 | 1T2R | One transmit antenna, two receive antennas |
| 3 | 1T4R | One transmit antenna, four receive antennas |
| 4 | 2T1R | Two transmit antennas, one receive antenna |
| 5 | 2T2R | Two transmit antennas, two receive antennas |
| ⋮ | ⋮ | ⋮ |
| k | *mTnR* | m transmit antennas, n receive antennas |

In this implementation, the BSC terminal reports a plurality of capability parameters desired by the network side device in a combined manner, and by reporting second information obtained by mapping, the network side device can obtain the desired capability parameters based on the reported second information and the preset mapping relationships.

In this implementation, the amount of data in the capability information reported by the terminal is reduced while implementation complexity is also considered.

In the foregoing implementation, the capability information is reported based on the first information indicating one supported capability parameter and/or the second information indicating at least two supported capability parameters, so that flexibility is relatively high and complexity of a terminal implementation logic is relatively low.

In another embodiment, in order to further reduce the amount of reported data, the capability parameters are mapped, terminal type information obtained by mapping is reported, and the network side device can obtain the desired capability parameters based on the reported terminal type information and correspondences. Therefore, in this embodiment, the capability information includes the terminal type information, and there is a correspondence between the terminal type information and a capability parameter that is supported by the terminal.

Specifically, only the terminal type information of the BSC terminal is reported in this embodiment, and the capability information of the terminal is represented based on preset correspondences, for example, a mapping table, so as to further reduce the amount of the data during reporting of capability information. As shown in Table 8, the BSC terminals are divided into Category 1, Category 2, ..., and Category n. Each Category i has a capability parameter mapped with it. The BSC terminal only needs to report the terminal type information, that is, Category i, in the UE Capability Information, and after the network side device obtains the terminal type information, specific capability information of the BSC terminal can be obtained in a manner such as querying the mapping table.

**Table 8: Examples of the mapping table of terminal categories of the BSC terminals and corresponding terminal capabilities**

| Category of the BSC terminal | Terminal capability mapping |
|---|---|
| Category 1 | Energy supply manner: Type B<br>Energy storage capability: 50 mW<br>Amplitude modulation capability: [0.01, 0.9]<br>Modulation mode: 4ASK<br>Operating frequency band: Band 77<br>Bandwidth: 10 MHz<br>Antenna capability: 1T2R<br>Encryption capability: CRC 16 |
| Category 2 | Energy supply manner: Type B<br>Energy storage capability: 100<br>Amplitude modulation capability: [0.01, 0.8]<br>Modulation mode: 4QAM<br>Operating frequency bands: Band 77 and Band 78<br>Bandwidth: 20 z<br>Antenna capability: 2T2R<br>Encryption capability: CRC 24 |
| ... | ... |
| Category n | Energy supply manner: Type C<br>Energy storage capability: 100 mW<br>Amplitude modulation capability: [0.01, 0.85]<br>Modulation mode: 64QAM<br>Operating frequency band: Band 78<br>Bandwidth: 20 MHz<br>Antenna capability: 2T4R<br>Encryption capability: supporting encryption, encryption algorithm 1 |

In the foregoing implementation, the BSC terminal reports only the terminal type information, and the network side device can obtain various capability parameters of the BSC terminal based on the reported terminal type information and the correspondences, so as to further reduce the amount of reported data and resource overheads.

Optionally, after the BSC terminal sends the capability information to the network side device, the network side device may schedule the BSC terminal, and the BSC terminal may send the data information according to scheduling of the network side device.

In an embodiment, step 101 may be implemented in the following manner:

The BSC terminal sends the capability information to the network side device through a target message, where the target message includes: the capability information and data information.

Specifically, for BSC terminals such as a passive Internet of Things device, due to limited energy supply capacity and low-cost low-power constraints, a relatively short data packet of such a terminal, generally no more than 1,000 bytes, and massive BSC terminals that need to be connected to the network, if the manner of reporting the capability information before transmitting data, scheduling by the network side device is required, and therefore a complex signaling interaction process is required, and a relatively high probability of collision exists. Therefore, for such a special Internet of Things device, a one-step transmission scheme in which capability information and data are transmitted may be used. Therefore, in this embodiment, the BSC terminal capability, a user identity, valid data, and the like may all be transmitted through the effective one-step transmission scheme. For example, resources reserved by the network for the terminal may be used. The one-step transmission scheme for UE capability reporting and data transmission is of great importance for averaging communication delays and controlling overheads for large-scale BSC terminal networking services.

Optionally, the one-step transmission scheme may be implemented in the random access process, that is, a scheme in which random access and capability information and data transmission are implemented in one step.

A signaling format used for the capability information of the BSC terminal may be similar to the signaling format in the foregoing embodiment. This is not limited in this embodiment of this application.

In the foregoing implementation, the BSC terminal may send the capability information of the BSC terminal together with the data information to the network side device, without scheduling by the network side device, and signaling interaction is simple.

In an embodiment, step 101 may be implemented in the following manners:

One implementation

The BSC terminal sends the capability information after receiving an indication from the network side device, that is, the BSC terminal receives a terminal capability enquiry message sent by the network side device.

The BSC terminal sends the capability information to the network side device according to the terminal capability enquiry message.

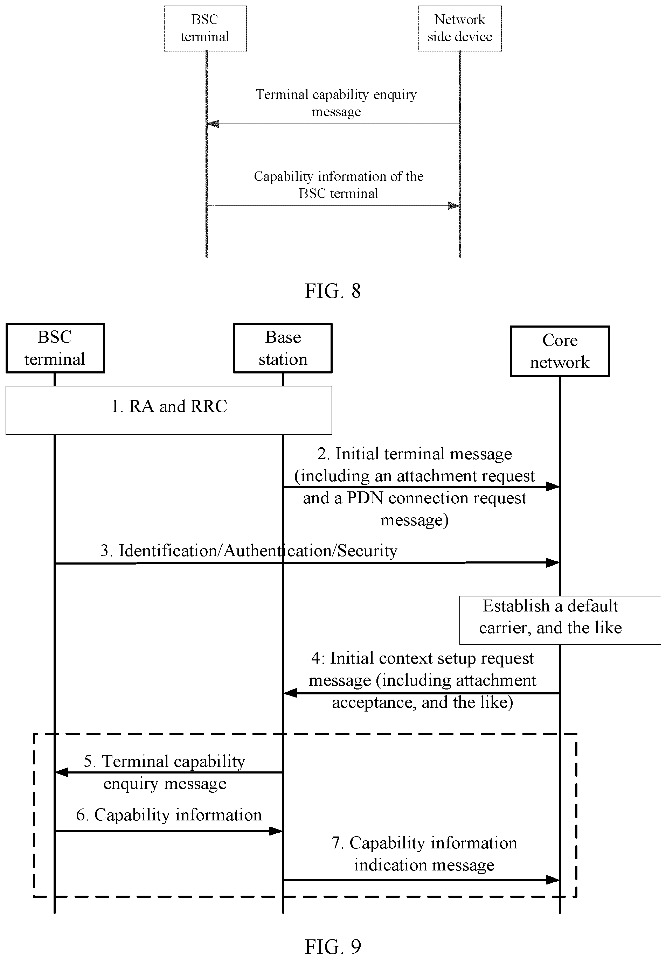

Specifically, as shown in FIG. 8, after entering an RRC connected state, the network side device delivers a terminal capability enquiry message (for example, UE Capability Enquiry signaling) to the BSC terminal to require the BSC terminal to report capability information of the BSC terminal (for example, UE Capability Information signaling). After receiving the terminal capability enquiry message, the BSC terminal reports the capability information of the BSC terminal according to an indication of the terminal capability enquiry message.

The UE Capability Enquiry signaling is used to indicate, to the BSC terminal, which capabilities that are of the terminal and that the network side device wants to specifically know, and a signaling structure of the signaling may be, for example, a signaling structure in UE Capability Enquiry in NR. This is not limited in this embodiment of this application. Similarly, in a case that the UE Capability Information is a capability parameter that is of the terminal and that is reported by the BSC terminal to the network side device according to the indication of the network side device, a signaling structure of the signaling may also be, for example, the signaling structure in UE Capability Information in NR. This is not limited in this embodiment of this application.

In the foregoing implementation, the BSC terminal sends the capability information of the BSC terminal to the network side device after receiving the indication from the network side device, so that the capability of the BSC terminal is reported to the network side device. Implementation complexity of the terminal is relatively low. This facilitates scheduling of the BSC terminal by the network side device according to the reported capability of the BSC terminal, thereby improving performance of backscatter communication.

Another implementation

The BSC terminal may actively report the capability information to the network side device, that is, in a case that the BSC terminal meets a trigger condition, the BSC terminal actively reports the capability information to the network side device, where

the trigger condition includes but is not limited to at least one of: first network access registration and a change of the capability information of the BSC terminal.

Optionally, the capability information is carried in network attached storage (Network Attached Storage, NAS) signaling.

Specifically, the BSC terminal may actively report the capability information to the network side device, and in order to reduce signaling interactions and resources, the BSC terminal may actively report the capability information when meeting the trigger condition. The trigger condition may include at least one of: first network access registration and a change of the capability information of the BSC terminal. The change of the capability information means a change of capability parameters included in the capability information, for example, specific content of the capability parameters, and/or a change of capability parameters that need to be reported. For example, a modulation mode in a previous report is a modulation mode 1, and a current modulation mode of the BSC terminal is changed to a modulation mode 2. In this case, active reporting may be performed. Alternatively, capability information in the previous report includes: a capability parameter 1, a capability parameter 2, and a capability parameter 3, and the BSC terminal has added a new capability parameter 4 currently. In this case, active reporting may also be performed.

Optionally, the BSC terminal actively reports its capability information through NSA signaling when the BSC terminal performs first network access (attach ATTACH/tracking area update (Tracking Area Update, TAU)) registration or when the capability information of the BSC terminal changes. As shown in FIG. 9, after an RRC connection is established, the BSC terminal may report its capability information to a core network device by using a message 2, namely, an initial terminal message (for example, Initial UE Message). Specifically, in step 1, the BSC terminal reports an attachment request message to the base station through an RRC connection setup complete message (for example, a Connection Setup Complete message) (at this time, the capability information of the BSC terminal may be carried), and the base station then reports the message to the core network device by using the message 2: the initial UE message.

Further, if the core network device carries an information element (Information Element, IE) of a terminal wireless capability in a message 4, namely, an initial context setup request message (Initial context setup request) delivered to the base station, the base station does not send the terminal capability enquiry message (the UE Capability Enquiry message) to the BSC terminal, that is, there is no following processes of 5, 6 and 7, and the processes of 5 to 7 are based on the enquiry-acknowledgment reporting manner; and otherwise, if no terminal capability is carried in the message 4, that is, the BSC terminal does not report the capability information in the message 2, the base station initiates a UE capability enquiry process. After the BSC terminal reports wireless capability information to the base station, the base station sends a capability information indication message (for example, a Capability Info Indication message) to a mobility management entity (Mobility Management Entity, MME) unit in the core network, to deliver and report the capability information of the BSC terminal to the MME.

In the foregoing implementation, the BSC terminal actively reports the capability information of the BSC terminal to the network side device, where the capability information is used to indicate the one or more capabilities supported by the BSC terminal, a network side indication is not required, signaling interaction is simple, and the capability of the BSC terminal is reported to the network side device. This facilitates scheduling of the BSC terminal by the network side device according to the reported capability of the BSC terminal, thereby improving performance of backscatter communication.

In an embodiment, an occasion for sending the capability information may specifically include:

After the BSC terminal is in a connected state, the BSC terminal sends the capability information to the network side device; or,

when the BSC terminal performs random access, the BSC terminal sends the capability information to the network side device.

Specifically, the BSC terminal may send the capability information after being in the connected state, or, send the capability information in a random access process without entering the connected state.

In the foregoing implementation, the BSC terminal may send the capability information after being in the connected state, or, send the capability information in the random access process, and flexibility is relatively high.

In an embodiment, the method for reporting a capability of a BSC terminal provided in this embodiment includes:

The network side device receives capability information of the BSC terminal sent by the BSC terminal, where the capability information is used to indicate one or more capabilities supported by the BSC terminal.

Optionally, the capability information includes at least one of the following: at least one piece of first information and at least one piece of second information, where the first information is used to indicate one capability parameter supported by the BSC terminal, and the second information is used to indicate at least two capability parameters supported by the BSC terminal.

Optionally, the capability information includes terminal type information, and there is a correspondence between the terminal type information and a capability parameter supported by the terminal.

Optionally, the capability parameter includes at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

Optionally, the second information includes a modulation mode, and the modulation mode is used to indicate at least one of an amplitude modulation parameter, a phase modulation parameter, a frequency modulation parameter, and a coding parameter; and/or,

the second information includes an antenna capability, and the antenna capability is used to indicate at least one of a quantity of transmit antennas and a quantity of receive antennas.

Optionally, the method further includes:

The network side device sends a terminal capability enquiry message to the BSC terminal, where the terminal capability enquiry message is used to indicate the BSC terminal to send the capability information to the network side device according to the terminal capability enquiry message.

Optionally, the capability information is actively reported by the BSC terminal to the network side device in a case that the BSC terminal meets a trigger condition, where

the trigger condition includes at least one of: first network access registration and a change of the capability information of the BSC terminal.

Optionally, the capability information is carried in network attached storage NAS signaling.

Optionally, the capability information is carried through a target message, and the target message further includes data information.

Optionally, the capability information is sent after the BSC terminal is in a connected state, or when the BSC terminal performs random access.

Optionally, the energy supply manner includes at least one of the following: passive, semi-passive, and active.

Optionally, the energy storage parameter includes at least one of the following: a maximum energy storage capacity, a type of an energy storage capability, and signal information used for energy storage; the maximum energy storage capacity includes at least one of the following: a maximum energy storage electric quantity and a maximum energy storage power; and the signal information includes at least one of the following: a bandwidth, a frequency, a waveform, and a signal format.

Optionally, the operating frequency band includes at least one of the following: an operating frequency band of an incoming signal and an operating frequency band of the backscatter signal.

Optionally, the encryption parameter includes at least one of the following: whether encryption is supported and an encryption algorithm.

Optionally, the coding parameter includes at least one of the following: a coding manner and a coding rate.

The specific implementation process and technical effect of the method of this embodiment are similar to those in the method embodiment on this terminal side. Refer to the detailed descriptions in the method embodiment on the terminal side for details. Details are not described herein again.

It should be noted that, the method for reporting a capability of a BSC terminal provided in this embodiment of this application may be performed by an apparatus for reporting a capability of a BSC terminal, or a processing module that is in the apparatus for reporting a capability of a BSC terminal and that is configured to perform the method for reporting a capability of a BSC terminal. In this embodiment of this application, the apparatus for reporting a capability of a BSC terminal provided in this embodiment of this application is described by using an example in which the apparatus for reporting a capability of a BSC terminal performs the method for reporting a capability of a BSC terminal.

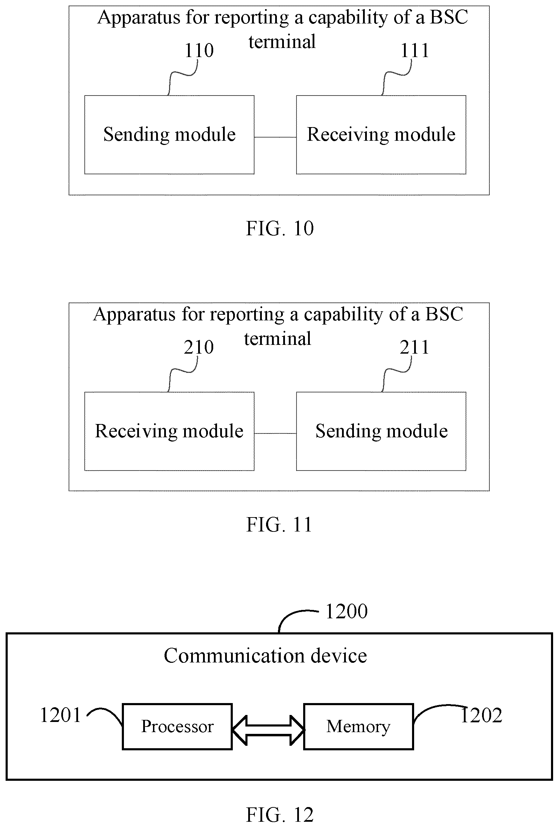

FIG. 10 is a first schematic structural diagram of an apparatus for reporting a capability of a BSC terminal according to this application. As shown in FIG. 10, the apparatus for reporting a capability of a BSC terminal according to this embodiment includes:

a sending module 110, configured to: send capability information of the BSC terminal to a network side device, where the capability information is used to indicate one or more capabilities supported by the BSC terminal.

In the apparatus of this embodiment, the sending module sends the capability information of the BSC terminal to the network side device, where the capability information is used to indicate the one or more capabilities supported by the BSC terminal, so that the capability of the BSC terminal is reported to the network side device. This facilitates scheduling of the BSC terminal by the network side device according to the reported capability of the BSC terminal, thereby improving performance of backscatter communication.

Optionally, the capability information includes at least one of the following: at least one piece of first information and at least one piece of second information, where the first information is used to indicate one capability parameter supported by the BSC terminal, and the second information is used to indicate at least two capability parameters supported by the BSC terminal.

Optionally, the capability information includes terminal type information, and there is a correspondence between the terminal type information and a capability parameter supported by the terminal.

Optionally, the capability parameter includes at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

Optionally, the second information includes a modulation mode, and the modulation mode is used to indicate at least one of an amplitude modulation parameter, a phase modulation parameter, a frequency modulation parameter, and a coding parameter; and/or,

the second information includes an antenna capability, and the antenna capability is used to indicate at least one of a quantity of transmit antennas and a quantity of receive antennas. Optionally, the apparatus further includes:

a receiving module 111, configured to receive a terminal capability enquiry message sent by the network side device; and

the sending module 110 is specifically configured to:

send the capability information to the network side device according to the terminal capability enquiry message.

Optionally, the sending module 110 is specifically configured to:

in a case that the BSC terminal meets a trigger condition, actively report the capability information to the network side device, where

the trigger condition includes at least one of: first network access registration and a change of the capability information of the BSC terminal.

Optionally, the capability information is carried in network attached storage NAS signaling.

Optionally, the sending module 110 is specifically configured to:

send the capability information to the network side device through a target message, where the target message includes: the capability information and data information.

Optionally, the sending module 110 is specifically configured to:

after the BSC terminal is in a connected state, send the capability information to the network side device; or, when the BSC terminal performs random access, send the capability information to the network side device.

Optionally, the energy supply manner includes at least one of the following: passive, semi-passive, and active.

Optionally, the energy storage parameter includes at least one of the following: a maximum energy storage capacity, a type of an energy storage capability, and signal information used for energy storage; the maximum energy storage capacity includes at least one of the following: a maximum energy storage electric quantity and a maximum energy storage power; and the signal information includes at least one of the following: a bandwidth, a frequency, a waveform, and a signal format.

Optionally, the operating frequency band includes at least one of the following: an operating frequency band of an incoming signal and an operating frequency band of the backscatter signal.

Optionally, the encryption parameter includes at least one of the following: whether encryption is supported and an encryption algorithm.

Optionally, the coding parameter includes at least one of the following: a coding manner and a coding rate.

The apparatus of this embodiment may be configured to perform the method of any embodiment in the method embodiments on the terminal side, and a specific implementation process and technical effect thereof are similar to those in the method embodiment on the terminal side. Refer to the detailed descriptions in the method embodiment on the terminal side for details. Details are not described herein again.

FIG. 11 is a second schematic structural diagram of an apparatus for reporting a capability of a BSC terminal according to this application.

As shown in FIG. 11, the apparatus for reporting a capability of a BSC terminal according to this embodiment includes:

a receiving module 210, configured to receive capability information of the BSC terminal sent by the BSC terminal, where the capability information is used to indicate one or more capabilities supported by the BSC terminal.

Optionally, the capability information includes at least one of the following: at least one piece of first information and at least one piece of second information, where the first information is used to indicate one capability parameter supported by the BSC terminal, and the second information is used to indicate at least two capability parameters supported by the BSC terminal.

Optionally, the capability information includes terminal type information, and there is a correspondence between the terminal type information and a capability parameter supported by the terminal.

Optionally, the capability parameter includes at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

Optionally, the second information includes a modulation mode, and the modulation mode is used to indicate at least one of an amplitude modulation parameter, a phase modulation parameter, a frequency modulation parameter, and a coding parameter; and/or,

the second information includes an antenna capability, and the antenna capability is used to indicate at least one of a quantity of transmit antennas and a quantity of receive antennas.

Optionally, the apparatus further includes:

a sending module 211, configured to send a terminal capability enquiry message to the BSC terminal, where the terminal capability enquiry message is used to indicate the BSC terminal to send the capability information to the network side device according to the terminal capability enquiry message.

Optionally, the capability information is actively reported by the BSC terminal to the network side device in a case that the BSC terminal meets a trigger condition, where

the trigger condition includes at least one of: first network access registration and a change of the capability information of the BSC terminal.

Optionally, the capability information is carried in network attached storage NAS signaling.

Optionally, the capability information is carried through a target message, and the target message further includes data information.

Optionally, the capability information is sent after the BSC terminal is in a connected state, or when the BSC terminal performs random access.

Optionally, the energy supply manner includes at least one of the following: passive, semi-passive, and active.

Optionally, the energy storage parameter includes at least one of the following: a maximum energy storage capacity, a type of an energy storage capability, and signal information used for energy storage; the maximum energy storage capacity includes at least one of the following: a maximum energy storage electric quantity and a maximum energy storage power; and the signal information includes at least one of the following: a bandwidth, a frequency, a waveform, and a signal format.

Optionally, the operating frequency band includes at least one of the following: an operating frequency band of an incoming signal and an operating frequency band of the backscatter signal.

Optionally, the encryption parameter includes at least one of the following: whether encryption is supported and an encryption algorithm.

Optionally, the coding parameter includes at least one of the following: a coding manner and a coding rate.

The apparatus of this embodiment may be configured to perform the method of any embodiment in the method embodiments on the network side, and a specific implementation process and technical effect thereof are similar to those in the method embodiment on the network side. Refer to the detailed descriptions in the method embodiment on the network side for details. Details are not described herein again.

The apparatus for reporting a capability of a BSC terminal in the embodiments of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, or a self-service machine. This is not specifically limited in the embodiments of this application.

The apparatus for reporting a capability of a BSC terminal provided in the embodiments of this application can implement the processes implemented in the method embodiments of FIG. 2 to FIG. 9, and achieve the same technical effect. To avoid duplication, details are not described herein again.

Optionally, as shown in FIG. 12, an embodiment of this application further provides a communication device 1200, including a processor 1201, a memory 1202, a program or an instruction stored in the memory 1202 and executable on the processor 1201. For example, when the communication device 1200 is a terminal, when the program or the instruction is executed by the processor 1201, the processes in the embodiments of the method for reporting a capability of a BSC terminal are implemented, and same technical effect can be achieved. When the communication device 1200 is a network side device, when the program or the instruction is executed by the processor 1201, the processes in the embodiments of the method for reporting a capability of a BSC terminal are implemented, and same technical effect can be achieved. To avoid repetition, details are not described herein again.

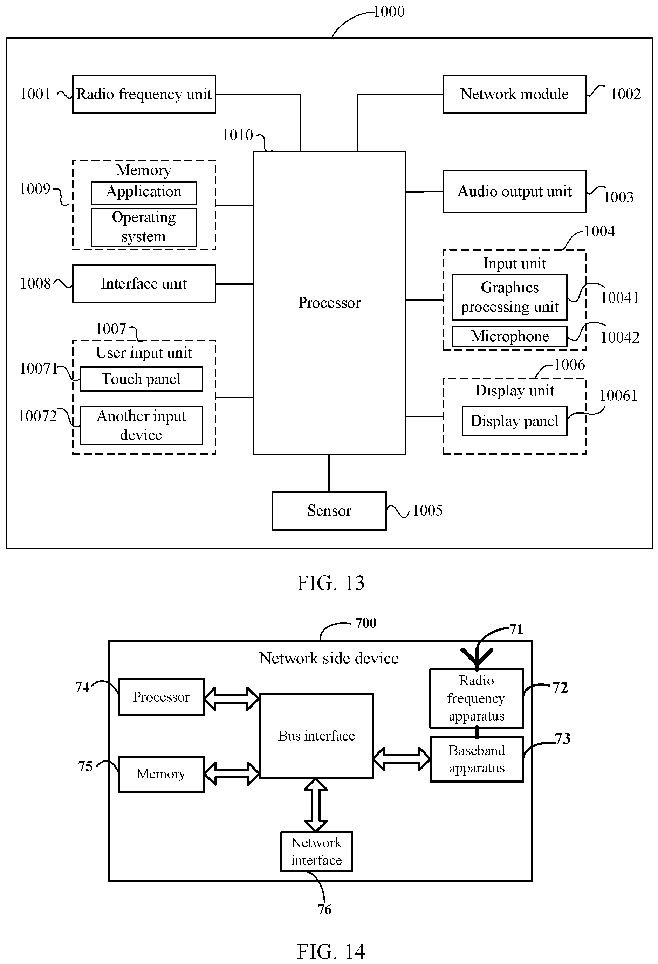

An embodiment of this application further provides a terminal, including a processor and a communication interface, where the communication interface is configured to send capability information of a BSC terminal to a network side device, and the capability information is used to indicate one or more capabilities supported by the BSC terminal. This terminal embodiment corresponds to the foregoing method embodiment on the terminal side. Each implementation process and implementation of the foregoing method embodiment may be applicable to this terminal embodiment, and same technical effect can be achieved. Specifically, FIG. 13 is a schematic diagram of a hardware structure of a terminal according to an embodiment of this application.

As shown in FIG. 13, the terminal 1000 includes but is not limited to at least some components in: a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power management system, to implement functions such as charging and discharging management, and power consumption management by using the power management system. The terminal structure shown in FIG. 13 constitutes no limitation on the terminal, and the terminal may include more or fewer components than those shown in the figure, or combine some components, or have different component arrangements. Details are not described herein.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. The display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Generally, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area, where the program or instruction storage area may store an operating system, an application or an instruction required by at least one function (such as a sound play function or an image play function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It may be understood that, alternatively, the modem processor may not be integrated into the processor 1010.

The radio frequency unit 1001 is configured to: send capability information of the BSC terminal to the network side device, where the capability information is used to indicate one or more capabilities supported by the BSC terminal.

In the apparatus of this embodiment, the radio frequency unit sends the capability information of the BSC terminal to the network side device, where the capability information is used to indicate the one or more capabilities supported by the BSC terminal, so that the capability of the BSC terminal is reported to the network side device. This facilitates scheduling of the BSC terminal by the network side device according to the reported capability of the BSC terminal, thereby improving performance of backscatter communication.

Optionally, the capability information includes at least one of the following: at least one piece of first information and at least one piece of second information, where the first information is used to indicate one capability parameter supported by the BSC terminal, and the second information is used to indicate at least two capability parameters supported by the BSC terminal.

In this implementation, the capability information is reported based on the first information indicating one supported capability parameter and/or the second information indicating at least two supported capability parameters, so that flexibility is relatively high. In addition, the amount of data in the capability information reported by the terminal is reduced by using the second information, and implementation complexity is also considered.

Optionally, the capability information includes terminal type information, and there is a correspondence between the terminal type information and a capability parameter supported by the terminal.

In the foregoing implementation, the BSC terminal reports only the terminal type information, and the network side device can obtain various capability parameters of the BSC terminal based on the reported terminal type information and the correspondences, so as to further reduce the amount of reported data and resource overheads.

Optionally, the capability parameter includes at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

Optionally, the second information includes a modulation mode, and the modulation mode is used to indicate at least one of an amplitude modulation parameter, a phase modulation parameter, a frequency modulation parameter, and a coding parameter; and/or,
the second information includes an antenna capability, and the antenna capability is used to indicate at least one of a quantity of transmit antennas and a quantity of receive antennas.

Optionally, the radio frequency unit 1001 is further configured to:

receive a terminal capability enquiry message sent by the network side device; and
send the capability information to the network side device according to the terminal capability enquiry message.

In the foregoing implementation, the BSC terminal sends the capability information of the BSC terminal to the network side device after receiving the indication from the network side device, so that the capability of the BSC terminal is reported to the network side device. Implementation complexity of the terminal is relatively low. This facilitates scheduling of the BSC terminal by the network side device according to the reported capability of the BSC terminal, thereby improving performance of backscatter communication.

Optionally, the radio frequency unit 1001 is specifically configured to:

in a case that the BSC terminal meets a trigger condition, actively report the capability information to the network side device, where
the trigger condition includes at least one of: first network access registration and a change of the capability information of the BSC terminal.

Optionally, the capability information is carried in network attached storage NAS signaling.
Optionally, the radio frequency unit 1001 is specifically configured to:
send the capability information to the network side device through a target message, where the target message includes: the capability information and data information.
In the foregoing implementation, the BSC terminal may send the capability information of the BSC terminal together with the data information to the network side device, without scheduling by the network side device, and signaling interaction is simple.
Optionally, the radio frequency unit 1001 is specifically configured to:

after the BSC terminal is in a connected state, send the capability information to the network side device; or,
when the BSC terminal performs random access, send the capability information to the network side device.

In the foregoing implementation, the BSC terminal actively reports the capability information of the BSC terminal to the network side device, where the capability information is used to indicate the one or more capabilities supported by the BSC terminal, a network side indication is not required, signaling interaction is simple, and the capability of the BSC terminal is reported to the network side device. This facilitates scheduling of the BSC terminal by the network side device according to the reported capability of the BSC terminal, thereby improving performance of backscatter communication.
Optionally, the energy supply manner includes at least one of the following: passive, semi-passive, and active.
Optionally, the energy storage parameter includes at least one of the following: a maximum energy storage capacity, a type of an energy storage capability, and signal information used for energy storage; the maximum energy storage capacity includes at least one of the following: a maximum energy storage electric quantity and a maximum energy storage power; and the signal information includes at least one of the following: a bandwidth, a frequency, a waveform, and a signal format.
Optionally, the operating frequency band includes at least one of the following: an operating frequency band of an incoming signal and an operating frequency band of the backscatter signal.
Optionally, the encryption parameter includes at least one of the following: whether encryption is supported and an encryption algorithm.
Optionally, the coding parameter includes at least one of the following: a coding manner and a coding rate.
An embodiment of this application further provides a network side device, including a processor and a communication interface, where the communication interface is configured to receive capability information of a BSC terminal sent by the BSC terminal, and the capability information is used to indicate one or more capabilities supported by the BSC terminal. This network side device embodiment corresponds to the foregoing method embodiment of the network side device. Each implementation process and implementation of the foregoing method embodiment may be applicable to this network side device embodiment, and same technical effect can be achieved.
Specifically, an embodiment of this application further provides a network side device. As shown in FIG. 14, the network side device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes information to be sent and sends processed information to the radio frequency apparatus 72, and the radio frequency apparatus 72 processes the received information and sends processed information through the antenna 71.
A frequency band processing apparatus may be located in the baseband apparatus 73. The method performed by the network side device in the foregoing embodiments may be implemented in the baseband apparatus 73. The baseband apparatus 73 includes a processor 74 and a memory 75.
The baseband apparatus 73 may include, for example, at least one baseband board, where a plurality of chips are disposed on the baseband board. As shown in FIG. 14, one chip is, for example, the processor 74, which is connected to the memory 75, so as to invoke a program in the memory 75 to perform operations of the network side device shown in the foregoing method embodiments.
The baseband apparatus 73 may further include a network interface 76, configured to exchange information with the radio frequency apparatus 72. For example, the interface is a common public radio interface (common public radio interface, CPRI for short).
Specifically, the network side device in this embodiment of this application further includes an instruction or a program stored in the memory 75 and executable on the processor 74. The processor 74 invokes the instruction or the program in the memory 75 to perform the method performed by the modules shown in FIG. 11, and achieve the same technical effect. To avoid repetition, details are not described herein.

An embodiment of this application further provides a readable storage medium. The readable storage medium stores a program or an instruction. When the program or the instruction is executed by a processor, the processes of the foregoing embodiments of the method for reporting a capability of a BSC terminal are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-only Memory, ROM), a random access memory (Random Access Memory, RAM), a magnetic disk, a compact disc, or the like.

An embodiment of this application further provides a chip. The chip includes a processor and a communication interface, the communication interface is coupled to the processor, and the processor is configured to run a program or an instruction, to implement the processes of the foregoing embodiments of the method for reporting a capability of a BSC terminal, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product, where the computer program/program product is stored in a non-transient storage medium, and the program/program product is executed by at least one processor, to implement the processes of the foregoing embodiments of the method for reporting a capability of a BSC terminal, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus.

In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be reflected in a form of a computer software product. The computer software product is stored in a storage medium (such as a ROM/RAM, a magnetic disk, or a compact disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. A method for reporting a capability of a backscatter communication BSC terminal, comprising:
   sending, by the BSC terminal, capability information of the BSC terminal to a network side device, wherein the capability information is used to indicate one or more capabilities supported by the BSC terminal.

2. The method for reporting the capability of the BSC terminal according to claim 1, wherein the capability information comprises at least one of the following: at least one piece of first information and at least one piece of second information, wherein first information is used to indicate one capability parameter supported by the BSC terminal, and second information is used to indicate at least two capability parameters supported by the BSC terminal.

3. The method for reporting the capability of the BSC terminal according to claim 1, wherein

the capability information comprises terminal type information, and there is a correspondence between the terminal type information and a capability parameter supported by a terminal.

4. The method for reporting the capability of the BSC terminal according to claim 2 or 3, wherein
the capability parameter comprises at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

5. The method for reporting the capability of the BSC terminal according to claim 2, wherein

the second information comprises a modulation mode, and the modulation mode is used to indicate at least one of an amplitude modulation parameter, a phase modulation parameter, a frequency modulation parameter, and a coding parameter; and/or,
the second information comprises an antenna capability, and the antenna capability is used to indicate at least one of a quantity of transmit antennas and a quantity of receive antennas.

6. The method for reporting the capability of the BSC terminal according to any one of claims 1 to 3, wherein the method further comprises:

receiving, by the BSC terminal, a terminal capability enquiry message sent by the network side device; and
the sending, by the BSC terminal, capability information of the BSC terminal to a network side device comprises: sending, by the BSC terminal, the capability information to the network side device according to the terminal capability enquiry message.

7. The method for reporting the capability of the BSC terminal according to any one of claims 1 to 3, wherein the sending, by the BSC terminal, capability information of the BSC terminal to a network side device comprises:

in a case that the BSC terminal meets a trigger condition, actively reporting, by the BSC terminal, the capability information to the network side device, wherein
the trigger condition comprises at least one of: first network access registration and a change of the capability information of the BSC terminal.

8. The method for reporting the capability of the BSC terminal according to claim 7, wherein
the capability information is carried in network attached storage NAS signaling.

9. The method for reporting the capability of the BSC terminal according to any one of claims 1 to 3, wherein the sending, by the BSC terminal, capability information of the BSC terminal to a network side device comprises: sending, by the BSC terminal, the capability information to the network side device through a target message, wherein the target message comprises: the capability information and data information.

10. The method for reporting the capability of the BSC terminal according to any one of claims 1 to 3, wherein the sending, by the BSC terminal, capability information of the BSC terminal to a network side device comprises:

after the BSC terminal is in a connected state, sending, by the BSC terminal, the capability information to the network side device; or,
when the BSC terminal performs random access, sending, by the BSC terminal, the capability information to the network side device.

11. The method for reporting the capability of the BSC terminal according to claim 4, wherein the energy supply manner comprises at least one of the following: passive, semi-passive, and active.

12. The method for reporting the capability of the BSC terminal according to claim 4, wherein the energy storage parameter comprises at least one of the following: a maximum energy storage capacity, a type of an energy storage capability, and signal information used for energy storage; the maximum energy storage capacity comprises at least one of the following: a maximum energy storage electric quantity and a maximum energy storage power; and the signal information comprises at least one of the following: a bandwidth, a frequency, a waveform, and a signal format.

13. The method for reporting the capability of the BSC terminal according to claim 4, wherein
    the operating frequency band comprises at least one of the following: an operating frequency band of an incoming signal and an operating frequency band of the backscatter signal.

14. The method for reporting the capability of the BSC terminal according to claim 4, wherein the encryption parameter comprises at least one of the following: whether encryption is supported and an encryption algorithm.

15. The method for reporting the capability of the BSC terminal according to claim 4, wherein the coding parameter comprises at least one of the following: a coding manner and a coding rate.

16. A method for reporting a capability of a backscatter communication BSC terminal, comprising:
    receiving, by a network side device, capability information of the BSC terminal sent by the BSC terminal, wherein the capability information is used to indicate one or more capabilities supported by the BSC terminal.

17. The method for reporting the capability of the BSC terminal according to claim 16, wherein the capability information comprises at least one of the following: at least one piece of first information and at least one piece of second information, wherein first information is used to indicate one capability parameter supported by the BSC terminal, and second information is used to indicate at least two capability parameters supported by the BSC terminal.

18. The method for reporting the capability of the BSC terminal according to claim 16, wherein
    the capability information comprises terminal type information, and there is a correspondence between the terminal type information and a capability parameter supported by a terminal.

19. The method for reporting the capability of the BSC terminal according to claim 17 or 18, wherein the capability parameter comprises at least one of the following: an energy supply manner, an energy storage parameter, an amplitude modulation parameter, a phase modulation parameter, a frequency modulation parameter, an operating frequency band, a modulation bandwidth of a backscatter signal, a quantity of transmit antennas, a quantity of receive antennas, an encryption parameter, a coding parameter, and a device identifier ID.

20. The method for reporting the capability of the BSC terminal according to claim 17, wherein the second information comprises a modulation mode, and the modulation mode is used to indicate at least one of an amplitude modulation parameter, a phase modulation parameter, a frequency modulation parameter, and a coding parameter; and/or, the second information comprises an antenna capability, and the antenna capability is used to indicate at least one of a quantity of transmit antennas and a quantity of receive antennas.

21. The method for reporting the capability of the BSC terminal according to any one of claims 16 to 18, wherein the method further comprises:
    sending, by the network side device, a terminal capability enquiry message to the BSC terminal, wherein the terminal capability enquiry message is used to indicate the BSC terminal to send the capability information to the network side device according to the terminal capability enquiry message.

22. The method for reporting the capability of the BSC terminal according to any one of claims 16 to 18, wherein the capability information is actively reported by the BSC terminal to the network side device in a case that the BSC terminal meets a trigger condition, wherein
    the trigger condition comprises at least one of: first network access registration and a change of the capability information of the BSC terminal.

23. The method for reporting the capability of the BSC terminal according to claim 22, wherein
    the capability information is carried in network attached storage NAS signaling.

24. The method for reporting the capability of the BSC terminal according to any one of claims 16 to 18, wherein the capability information is carried through a target message, and the target message further comprises data information.

25. The method according to any one of claims 16 to 18, wherein the capability information is sent after the BSC terminal is in a connected state, or when the BSC terminal performs random access.

26. The method according to claim 19, wherein the energy supply manner comprises at least one of the following: passive, semi-passive, and active.

27. The method according to claim 19, wherein the energy storage parameter comprises at least one of the following: a maximum energy storage capacity, a type of an energy storage capability, and signal information used for energy storage; the maximum energy storage capacity comprises at least one of the following: a maximum energy storage electric quantity and a maximum energy storage power; and the signal information comprises at least one of the following: a bandwidth, a frequency, a waveform, and a signal format.

28. The method according to claim 19, wherein
the operating frequency band comprises at least one of the following: an operating frequency band of an incoming signal and an operating frequency band of the backscatter signal.

29. The method according to claim 19, wherein
the encryption parameter comprises at least one of the following: whether encryption is supported and an encryption algorithm.

30. The method according to claim 19, wherein
the coding parameter comprises at least one of the following: a coding manner and a coding rate.

31. An apparatus for reporting a capability of a backscatter communication BSC terminal, comprising:
a sending module, configured to: send capability information of the BSC terminal to a network side device, wherein the capability information is used to indicate one or more capabilities supported by the BSC terminal.

32. An apparatus for reporting a capability of a backscatter communication BSC terminal, comprising:
a receiving module, configured to receive capability information of the BSC terminal sent by the BSC terminal, wherein the capability information is used to indicate one or more capabilities supported by the BSC terminal.

33. A terminal, comprising a processor, a memory, and a program or an instruction stored in the memory and executable on the processor, wherein when the program or the instruction is executed by the processor, the steps of the method for reporting the capability of the BSC terminal according to any one of claims 1 to 15 are implemented.

34. A network side device, comprising a processor, a memory, and a program or an instruction stored in the memory and executable on the processor, wherein when the program or the instruction is executed by the processor, the steps of the method for reporting the capability of the BSC terminal according to any one of claims 16 to 30 are implemented.

35. A readable storage medium, wherein the readable storage medium stores a program or an instruction, and when the program or the instruction is executed by a processor, the steps of the method for reporting the capability of the BSC terminal according to any one of claims 1 to 15, or the method for reporting the capability of the BSC terminal according to any one of claims 16 to 30 are implemented.

36. A chip, wherein the chip comprises a processor and a communication interface, wherein the communication interface is coupled to the processor, and the processor is configured to run a program or an instruction, to implement the steps of the method for reporting the capability of the BSC terminal according to any one of claims 1 to 15, or the method for reporting the capability of the BSC terminal according to any one of claims 16 to 30.

37. A computer program/program product, wherein the computer program/program product is stored in a non-transient storage medium, and the program/program product is executed by at least one processor, to implement the steps of the method for reporting the capability of the BSC terminal according to any one of claims 1 to 15, or the method for reporting the capability of the BSC terminal according to any one of claims 16 to 30.

12

Network side
device

11

11

Terminal

Terminal

FIG. 1

$S_{in}(t)$

$S_{out}(t)$

Incoming
RF signal

Modulated
backscatter
signal

$T_T(t)$

Channel coding
and modulation
module

Analog
circuit

FIG. 2

$S_{in}(t)$

$S_{out}(t)$

Modulated
backscatter signal

Incoming
RF signal

$T_T(t)$

$T_T=T_0$

$T_T=T_1$

$T_T=T_2$

$T_T=T_n$

Symbol 0 $\longrightarrow$ Impedance 0
Symbol 1 $\longrightarrow$ Impedance 1
$\vdots$
Symbol n $\longrightarrow$ Impedance n

Controller

Channel coding and
modulation module

FIG. 3

Reader

BSC transmit end

FIG. 4

RF carrier
transmitter

BSC receive end

BSC transmit end

FIG. 5

Ambient RF
source

Convention
al terminal

BSC terminal A

BSC terminal B

Network side
device

FIG. 6

| BSC terminal | | Network side device |
|---|---|---|

101: Capability information of the
BSC terminal, where the capability
information is used to indicate one or
more capabilities supported by the
BSC terminal

FIG. 7

FIG. 8

FIG. 9

Apparatus for reporting a capability of a BSC terminal

110 111

| Sending module | — | Receiving module |

FIG. 10

Apparatus for reporting a capability of a BSC terminal

210 211

| Receiving module | — | Sending module |

FIG. 11

1200

Communication device

1201 Processor ⟺ Memory 1202

FIG. 12

FIG. 13

FIG. 14

## INTERNATIONAL SEARCH REPORT

| | International application No. |
|---|---|
| | **PCT/CN2022/126263** |

**A.    CLASSIFICATION OF SUBJECT MATTER**

H04W 4/80(2018.01)i;  H04B 5/00(2006.01)i;  H04W 72/00(2023.01)n

According to International Patent Classification (IPC) or to both national classification and IPC

**B.    FIELDS SEARCHED**

Minimum documentation searched (classification system followed by classification symbols)

H04W; H04B 5/-

Documentation searched other than minimum documentation to the extent that such documents are included in the fields searched

Electronic data base consulted during the international search (name of data base and, where practicable, search terms used)

CNTXT; ENTXTC; CNKI; WPABS; ENTXT; 3GPP: 黄伟, 姜大洁, 沈晓冬, 反向散射, 能力, 上报, 报告, 发送, 查询, 终端, 设备, 有源, 无源, 调制, 加密, 编码, 参数, 频段, 天线, 个, 数; bsc, baackscatter d communicat+, capabilit+, abilit+, support +, report+, terminal, device

**C.    DOCUMENTS CONSIDERED TO BE RELEVANT**

| Category* | Citation of document, with indication, where appropriate, of the relevant passages | Relevant to claim No. |
|---|---|---|
| Y | WO 2021163971 A1 (GUANGDONG OPPO MOBILE COMMUNICATIONS CO., LTD.) 26 August 2021 (2021-08-26) description, p. 6, line 4 to p. 8, line 14 and p. 10, line 32 to p. 13, line 35 | 1-37 |
| Y | CN 112398626 A (HUAWEI TECHNOLOGIES CO., LTD.) 23 February 2021 (2021-02-23) description, paragraphs 52-63 and 82-119 | 1-37 |
| A | CN 111385000 A (FORD GLOBAL TECHNOLOGIES, L.L.C.) 07 July 2020 (2020-07-07) entire document | 1-37 |
| A | CN 113065365 A (FUDAN UNIVERSITY) 02 July 2021 (2021-07-02) entire document | 1-37 |
| A | CN 112770316 A (RESEARCH INSTITUTE OF CHINA MOBILE COMMUNICATIONS CORPORATION et al.) 07 May 2021 (2021-05-07) entire document | 1-37 |
| A | CN 110933750 A (VIVO COMMUNICATION TECHNOLOGY CO., LTD.) 27 March 2020 (2020-03-27) entire document | 1-37 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2023** | **11 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/126263**

| Patent document cited in search report | | | Publication date (day/month/year) | Patent family member(s) | | | Publication date (day/month/year) |
|---|---|---|---|---|---|---|---|
| WO | 2021163971 | A1 | 26 August 2021 | EP | 4102728 | A1 | 14 December 2022 |
| | | | | US | 2022386348 | A1 | 01 December 2022 |
| | | | | CN | 115053463 | A | 13 September 2022 |
| CN | 112398626 | A | 23 February 2021 | CN | 112398626 | B | 01 October 2021 |
| CN | 111385000 | A | 07 July 2020 | DE | 102019134038 | A1 | 18 June 2020 |
| | | | | US | 2020195058 | A1 | 18 June 2020 |
| | | | | US | 10587150 | B1 | 10 March 2020 |
| CN | 113065365 | A | 02 July 2021 | CN | 113065365 | B | 12 April 2022 |
| CN | 112770316 | A | 07 May 2021 | WO | 2021088759 | A1 | 14 May 2021 |
| CN | 110933750 | A | 27 March 2020 | WO | 2020057597 | A1 | 26 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111222051